# EUROPEAN PATENT SPECIFICATION

(11) **EP 2 772 423 B1**
(45) Date of publication and mention of the grant of the patent: **05.04.2017**
(21) Application number: 14157138.0
(22) Date of filing: 28.02.2014
(51) Int. Cl.: B62M 6/70, B62J 11/00

(54) **Method of converting regular bike into pedelec**
Verfahren zur Umwandlung eines normalen Fahrrads in ein Pedelec
Procédé de conversion de vélo régulier en vélo à assistance électrique

(30) Priority: 28.02.2013 CN 201310066229
(43) Date of publication of application: 03.09.2014
(73) Proprietor: Homevelo Industrial Co., Limited, Kowloon Bay, Hong Kong (HK)
(72) Inventor: Liang, Xiaonan, Kowloon Bay (HK); Yip, Wai Kuen, Kowloon Bay (HK); Zhu, Shaoming, Kowloon Bay (HK)
(74) Representative: Berkkam, Ayfer

(56) References cited:
- CN-U- 202 754 094
- DE-U1- 29 610 696
- JP-A- 2001 130 476
- JP-A- 2007 230 410
- US-A1- 2005 189 157
- US-A1- 2012 048 634

## Description

### TECHNICAL FIELD

The present invention relates to bicycles, and more in particular to a method of converting the regular bike(s) into pedelec(s).

### BACKGROUND

In current related technique of electric bikes, the pedaling torque sensing system together with the motor reducer is an integral driving unit which to be mounted on the bicycle frame with a custom-made bottom bracket, it is impossible for final users to install it on regular bike. Besides, if the driving system is uninstalled, to re-install it again will require re-tuning the position of the pedal torque sensing system and motor reducer in order to have accurate data, if have not the good installing position, it is difficult to ensure the driving system is installed in the document US 2012/048634 represents the closest prior art in accordance with the preamble of claim 1.

US 2012/048634A1 discloses a bicycle generally includes a head pipe, a down frame, and a seat pipe. A rear fork extending rearwardly is disposed at a rear end of the down frame. A rear wheel (drive wheel) WR is journaled at a rear end of the rear fork. The down frame and the rear fork support an assist drive unit. The assist drive unit integrally holds, within a housing thereof, a brushless motor, a motor driver, a controller, a drive gear, an output shaft, and an assist sprocket. A crankshaft extending in a width direction of the bicycle body penetrates through the assist drive unit and a sprocket (output unit). A crank having a pedal and a crank having a pedal are connected to either side of the crankshaft. The sprocket, a chain, and the sprocket function as a drive system mechanism. To allow a large winding angle for the chain, an idler is disposed rearwardly of the assist sprocket. The control means is for controlling an output of the motor according to a torque value of a pedaling torque applied to the crankshaft as detected by a torque sensor. The bicycle further includes an annular hollow torque transmitting member inserted over an outer periphery of the crankshaft; and a one-way clutch, disposed on the hollow torque transmitting member. When a rider pedals the pedals a pedaling torque is applied to the crankshaft. The sprocket is rotated because of the pedaling torque applied to the crankshaft. The rotation of the sprocket is transmitted to a sprocket on the side of the rear wheel WR, which rotates the rear wheel WR.

### SUMMARY

The present invention is directed to an improved method of converting a regular bike into pedelec. The present invention provides a technical solution, by adopting the following steps to achieve it, wherein:
(A) According to an aspect of the invention, a bicycle is provided, comprising a bicycle frame including a bottom bracket and a chainstay connected; a rear wheel being rotatably mounted on the chainstay via a rear shaft; and a driving unit includes a central shaft, a pedal chain wheel, two pedal devices, a freewheel and a chain; wherein the central shaft is rotatably mounted in the bottom bracket and the pedal chain wheel is mounted on the central shaft, with the two pedal devices mounted at both ends thereof respectively; with the freewheel rotatably mounted on the rear shaft and cooperating with the rear wheel, so as to drive the rear wheel to rotate; the chain is connected with the pedal chain wheel and the freewheel, so as to transmit the driving force of the pedal chain wheel to the freewheel;
(B) an electric power-assisted device is provided, including a torque sensing unit and an electric power-assisted unit and a control unit;
(C) the torque sensing unit is installed inside the bottom bracket and cooperates with the central shaft, so as to sense the torque generated on the central shaft by the pedal devices;
(D) a control unit electrically connected with the torque sensing unit, according to the torque signal generated by the torque sensing unit, the control unit will transmit the control signal to electric power-assisted unit; and
(E) an electric power-assisted unit mounted on the rear chainstay and cooperates with the chain, according to the size of control signal, the electric power-assisted unit will indicate the corresponding driving force to the chain.

And the electric power-assisted unit includes a motor reducer, a drive chain wheel and positioning mechanism; a drive chain wheel mounted on the output shaft of the motor reducer, and cooperates with the chain; Step (E) and also Step (F): the motor reducer is mounted on the chainstay via the positioning mechanism.

And the chainstay includes a first beam and a second beam that are mounted at their ends on the bottom bracket, where a wedge-shaped mounting area is formed near the bottom bracket, the narrow side of the mounting area is closed to the bottom bracket; Step (F) and also Step (G): the motor reducer is mounted on the rear chainstay by a the positioning mechanism.

And the positioning mechanism includes a first locking bolt nut and pressing plate; Step (G) and also Step (H): the pressing plate and motor reducer is placed on the top and bottom of the mounting area respectively, via the first locking bolt nut.

And the pressing plate has a concave structure on its bottom for embedment suiting the mounting area, so as to prevent it from shifting from narrow to the wider side.

And the positioning mechanism includes at least one piece positioning block and at least one piece second locking bolt nut; Step (G) and also Step (I): the positioning block is fixed by at least one piece second locking bolt nut between the pressing plate and the motor reducer, then between the first beam and the second beam, tightly close the inside of the first beam and the second beam through positioning block, so as to prevent the pressing plate and the motor reducer from shifting from wider side to narrow side.

And Step (G) and also Step (J): at least one piece positioning block is fixed on the motor reducer by the second locking bolt nut, the mentioned positioning block is having a waisted-shape hole that allow the second locking bolt nut go through, so as to make the position of the positioning block and the motor reducer adjustable.

And at least one piece positioning block with a chute at the bottom, the top of the motor reducer formed a positioning raised-deck to suit the chute; wherein, the distance between the mid line of the positioning raised-deck to the drive chain wheel is equal to the distance between the mid line of the bottom bracket to mid line of the plane of pedal chain wheel.

Preferably, the bottom bracket includes a cylindrical bottom bracket body, a left screw cap and a right screw cap mounted at both ends; the side of the mentioned cylindrical bottom bracket body connected with the chain stay; Step (C) and also Step (K): put the torque sensing unit on the central shaft, then put the central shaft into bottom bracket body, and rotatably mounted the left screw cap and the right screw cap.

Preferably, Step (C) and also Step (L): mounted the inner driving gear on the central shaft, then mounted the pedal chain wheel appropriately to the slots of the inner driving gear.

The present invention for converting regular bike into pedelec is having the advantages: The torque sensing unit is installed inside the bottom bracket, the electric power-assisted unit is mounted on the chainstay. Besides, the mounting of torque sensing unit is based on the installing position at bottom bracket, and mounting of electric power-assisted unit is based on the installing position at rear chainstay, since the bottom bracket and the chainstay are relatively more stable, its ensure the assembling accurately, and enable the assembling and disassembling of electric power-assisted unit of the pedelec much easier and simply.

Other features and advantages of the present invention will become obviously through the following detailed description together with the drawings and embodiments.

### BRIEF DESCRIPTION OF THE DRAWINGS

Fig. 1 is a schematic drawing showing the dimensional structure of the present invention installed on the bicycle;
Fig. 2 is a schematic drawing showing the related structure of the the pedal torque sensing unit and the bottom bracket of the present invention;
Fig. 3 is an enlarged schematic drawing of the relation of assembling structure of the electric power-assist unit of the present invention;
Fig. 4 is an exploded schematic drawing of the electric power-assisted unit of the present invention.

### DETAILED DESCRIPTION OF EMBODIMENTS

For the clear understanding of the present invention regarding the technical characteristics, purposes and effect, the specific embodiments of the drawings as belows.

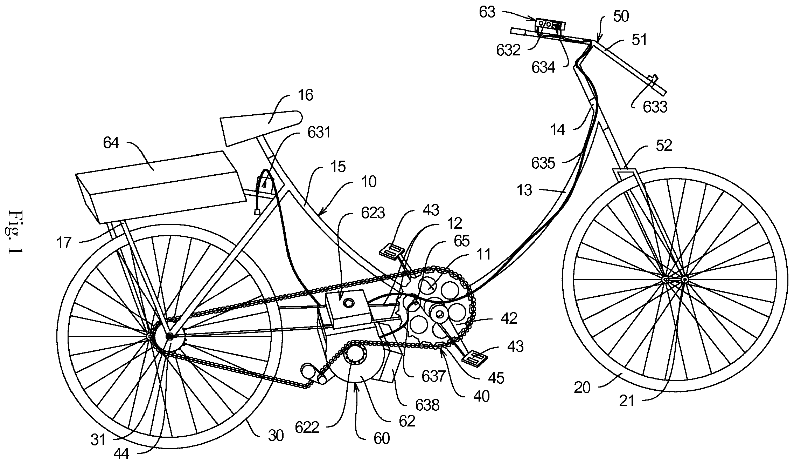

As shown in Fig. 1, the pedelec of the present invention may comprise a bicycle frame 10; a front wheel 20, a rear wheel 30, a driving unit 40, s steering device 50 and an electric power-assisted device 60. A steering device 50 installed in front of the bicycle frame 10 for controlling the direction of bicycle; and a front wheel 20 installed on the steering device 50; and a rear wheel 30 mounted at the rear of the bicycle frame 10; the driving unit 40 installed between the bicycle frame 10 and the rear wheel 30 for driving the rear wheel 30 to rotate; the electric power-assisted device 60 installed on the bicycle frame 10 and cooperates with the driving unit 40 to provide electric assisting power for the bicycle.

The bicycle frame 10 for some specific embodiments may include a bottom bracket 11, a chainstay 12, an inclined beam 13, a head tube 14, a stem 15, a seat 16 and a rear luggage rack 17. Wherein, the chainstay 12, the inclined beam 13 and the stem 15 can be welded at one end to the outer surface of the bottom bracket 11; a rear wheel 30 rotatably mounted at the end of chainstay 12 via a rear shaft 31; a head tube 14 is welded at the other end of inclined beam 13, so as to allow the steering device 50 to be mounted rotatably thereon; a seat 16 is mounted at the other end of stem 15; and a rear luggage rack 17 mounted above the rear wheel 30, and connected with the stem 15 and the chainstay 12.

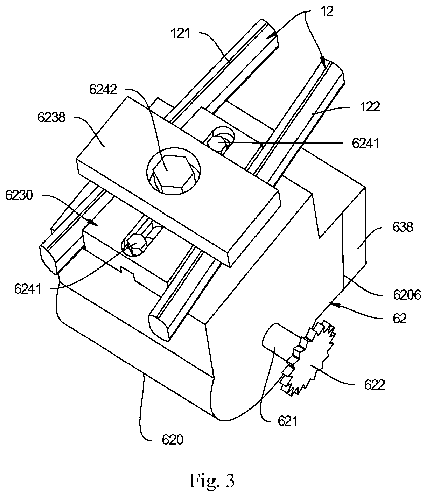

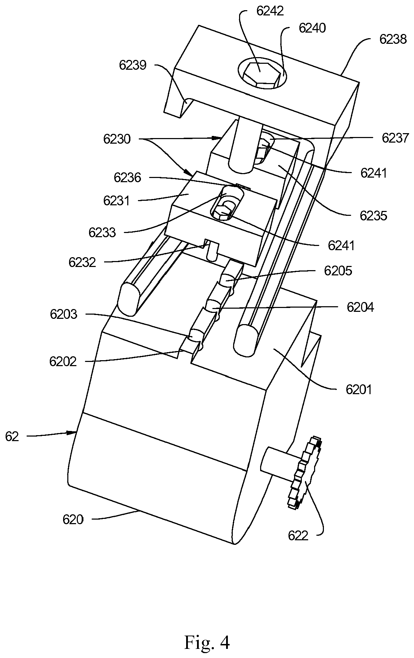

As shown in Figs. 3 and 4, the chainstay 12 for some specific embodiments may include a first beam 121 and a second beam 122, one end of the beams are connected with the side of the bottom bracket 11, where a wedge-shaped mounting area is formed near the bottom bracket 11, the narrow side of the mounting area is closed to the bottom bracket.

The steering device 50 for some specific embodiments may include a handlebar 51 and a front fork 52. Handlebar 51 and front fork 52 connected to form the portion for rotatably going through the head tube 14, so as to make the steering device 50 rotatable around the central axis of the head tube 14, thereby controlling the direction of the front wheel 20; front wheel 20 was mounted on the lower end of the front fork 52 via a front shaft 21.

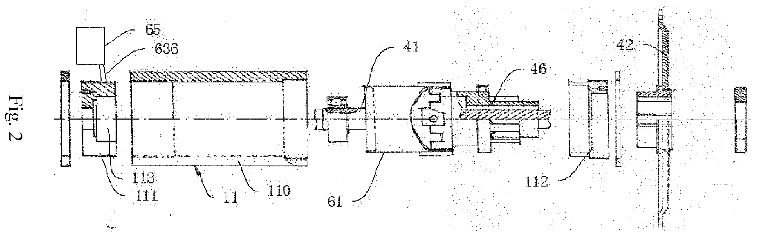

As shown in Fig. 2, the driving unit 40 for some specific embodiments may include a central shaft 41, a pedal chain wheel 42, two pedal devices 43, a freewheel 44, a chain 45 and inner driving gear 46. A central shaft 41 rotatably mounted in the bottom bracket 11; a inner driving gear 46 sleeved on central shaft 41; a pedal chain wheel 42 mounted on the inner driving gear 46 appropriately according to the slots on the pedal chain wheel 42, thereby allowing quick disassembly of the pedal chain wheel 42 and the inner driving gear 46; two pedal devices 43 mounted at both ends of the central shaft 41 respectively, providing a rotating force for the pedal chain wheel 42; a freewheel 44 rotatably mounted on the rear shaft 31 and cooperates with the rear wheel 30, so as to drive the rear wheel 30 to rotate. During the operation, rider's pedaling will make the pedal devices 43 to rotate the central shaft 41, which will further drive the pedal chain wheel 42 to rotate and which will transfer the force to freewheel 44 through chain 45, then freewheel 44 will drive the rear wheel 30 to rotate.

As shown in Figs. 1 and 2, the electric power-assisted device 60 for some specific embodiments may include a torque sensing unit 61, an electric power-assisted unit 62, a control unit 63, a power supply 64 and a signal receiver 65. A torque sensing unit 61 installed in the bottom bracket 11 and cooperates with the central shaft 41, so as to sense the torque value of pedaling power; an electric power-assisted unit 62 mounted on the chainstay 12 and cooperates with the chain 45 of driving unit 40, so as to provide a driving force for the chain 45;; and a signal receiver 65 installed at the outside of the bottom bracket 11, and electrically connected with the torque sensing unit 61 via a signal cable 636, so as to receive the pedal torque information sensed by the torque sensing unit 61; a power supply 64 installed on the rear luggage rack 17 for providing power to other devices of the electric power-assisted device 60.

For some specific embodiments, the control unit 63 includes a power switch 631, control panel 632, display screen 634 and a controller 638. A power switch 631 installed on the rear luggage rack 17 and near the power supply 64, for controlling the power supplying; a control panel 632 mounted on the handlebar 51 and provided with a switch key and a setting key, which are used for controlling the power on/off of the electric power-assisted unit 62 and also the riding mode setting; a speed regulator 633 mounted on the handlebar 51 for regulating the traveling speed; a display screen 634 on the control panel 632 for indicating the level of the power supply, so that the rider can keep track of the power supply of a battery at any time, in order to decide a reasonably operation of the motor reducer and charge the battery in time, so as to avoid no enough power supply is available for driving; a controller 638 mounted on a side of the motor reducer, so as to receive the torque data from signal receiver 65 via a data cable 637, and also control the electric power-assisted unit 62 to output the corresponding driving force to the driving chain wheel 622, all of them are interconnected electrically; the signal cable 636 between the control unit 63 and the power supply 64 is mounted along the bicycle frame 10.

As shown in Fig. 2, the bottom bracket 11 for some specific embodiments may include a bottom bracket body 110 as well as a left screw cap 111 and a right screw cap 112 at both ends, wherein the bottom bracket body 110 is cylindrical shape, having its axis run parallel to the axis of the front wheel 20 and the rear wheel 30, with its side wall connected with the end of the chainstay 12 and the inclined beam 13; and in their middle of the left screw cap 111 and the right screw cap 112 are provided with a mounting hole 113 respectively, for the left screw cap 111 further provided a cable lead hole through which the signal wire 636 goes through.

The central shaft 41 can be rotatably mounted around its axis in the mounting hole 113 of the left screw cap 111 and the right screw cap 112; one end of the torque sensing unit 61 is connected with the inner driving gear 46 of the driving unit 40, and sleeved together on the central shaft 41, with the inner driving gear 46 used for transferring the torque generated by pedal chain wheel 42 to the torque sensing unit 61; the torque sensing unit 61 and the inner driving gear 46 are rotatably mounted between the two mounting holes 113 of the left screw cap 111 and the right screw cap 112; the signal receiver 65 is normally installed at the outside of the portion where the bottom bracket body 110 is connected with the left screw cap 111, and the torque sensing unit 61 transfers via the signal cable 636 the torque information generated by the pedal device 43 for the central shaft 41 to the signal receiver 65.

The signal receiver 65 receives the torque information from torque sensing unit 61 and transfers it to the controller 638, then the controller 638 will process the torque information and send the control instruction to electric power-assisted unit 62, so that the electric power-assisted unit 62 will output the corresponding driving force to the chain 45; and the power supply 64 provides electric supply for the torque sensing unit 61, the electric power-assisted unit 62, the control unit 63 and the signal receiver 65.

As shown in Figs. 3 and 4, the electric power-assisted unit 62 for some specific embodiments may include a motor reducer 621, a driving chain wheel 622 and positioning mechanism 623; a motor reducer 621 located below the first beam 121 and the second beam 122, so as to output the rotational power; a driving chain wheel 622 installed on the output shaft of the motor reducer 621, at the same side of the bicycle with the pedal chain wheel 42, the driving wheel 622 also cooperates with the chain 45 of the driving unit 40, so as to transfer the rotational power generated by the motor reducer 621 to the chain 45; the motor reducer 621 is fixed on the first beam 121 and the second beam 122 by the positioning mechanism 623.

The motor reducer 621 for some specific embodiments may include a case 620, which includes a mounting interface 6201, positioning raised-deck 6202 and side wall 6206. A mounting interface 6201 was formed on the upper surface of the case 620, and jointed with the bottom of the first beam 121 and the second beam 122; a positioning raised-deck 6202 mounted on the mounting interface 6201 and extends forward; a side wall 6206 of the case 620 is located on a side of the bottom bracket 11, and provided with a threaded hole for mounting the controller 638.

Preferably, the positioning raised-deck 6202 having its extending direction runs parallel to the plane where the driving chain wheel 622 is located, and the distance between the mid line of the positioning raised-deck 6202 to the driving chain wheel 622 is equal to the distance between the mid line of the bottom bracket 11 to mid line of the plane of pedal chain wheel 42. The mounting interface 6201 is further provided with a first lock-hole 6203, a second lock-hole 6204 and a third lock-hole 6205 cooperating with the positioning mechanism 623, all of which can be a threaded hole, and distributed at intervals on the mid line of the positioning raised-deck 6202.

Again as shown in Figs. 3 and 4, the positioning mechanism 623 includes a positioning block 6230, a pressing plate 6238 and a first locking bolt nut 6241 and a second locking bolt nut 6242. A positioning block 6230 was mounted on the positioning raised-deck 6202 by first locking bolt nut, and jointed with the inner side of the first beam 121 and the second beam 122, so as to prevent the motor reducer 621 from drifting forward or sideward, i.e. preventing the motor reducer 621 in the mounting area moving from the wider end to the narrow end; a pressing plate 6238 was mounted above the first beam 121 and the second beam 122, and connected with the second lock-hole 6204 of the reducer motor 621 by second locking bolt nut 6242, so as to prevent the motor reducer 621 moving backward from the bicycle body, i.e. preventing the pressing plate 6238 from shifting from the narrow end to the wider end in the mounting area; and for example a locking bolt nut 6241 and a locking bolt nut 6242 may be bolts.

The positioning block 6230 for some specific embodiments may include a first positioning block 6231 and a second positioning block 6235 mounted at both ends of the positioning raised-deck 6202 respectively and which formed a trapezoidal structure adapted to the trapezoidal structure of the first beam 121 and the second beam 122, so as to ensure that the case 620 cannot move forward and sideward; in other case the shape of the positioning block 6230 can also be designed according to the shape between the first beam 121 and the second beam 122, which prevent the shifting of the case 620 on the bicycle body. The first positioning block 6231 is provided with a first groove 6232 on its bottom which cooperating with the positioning raised-deck 6202, and a first connecting hole 6233 corresponding to the first lock-hole 6203. The second positioning block 6235 is provided with a second groove 6236 on its bottom which cooperating with the positioning raised-deck 6202, and a third connecting hole 6237 corresponding to the third lock-hole 6205.

In this embodiments, the first positioning block 6231 and the second positioning block 6235 can slide back and forth along the positioning raised-deck boss 6202, so as to adjust the position of the first positioning block 6231 and the second positioning block 6235 according to the case 620. The first connecting hole 6233 and the third connecting hole 6237 are connected with the first lock-hole 6203 and the third lock-hole 6205 of the case 620 relatively by the locking bolt nut 6241 and 6242. The first connecting hole 6233 and the third connecting hole 6237 are waisted-shape holes, so that the first positioning block 6231 and the second positioning block 6235 can be adjusted the position along the direction of the positioning raised-deck, they can still locked together with the case 620, so that positioning of the inner face of the first beam 121 and the second beam 122 can be achieved.

The jointing face of the pressing plate 6238 with the first beam 121 and the second beam 122 is of a concave structure 6239, which is a trapezoidal structure adapted to the external trapezoidal structure of the first beam 121 and the second beam 122, thus ensuring that the case 620 does not shift backward. On the other case, the concave structure 6239 can also be other concave structure corresponding to the beams of the bicycle, thereby ensuring a fixed position on the bicycle frame 10. The pressing plate 6238 is provided with a second connecting hole 6240 which is corresponding to the position of the second lock-hole 6204 of the case 620, by using locking bolt nut 6242 going through the second connecting hole 6240 to get locked together with the second lock-hole 6204, thereby fixing the pressing plate 6238 with the case 620.

The assembly process of the torque sensing unit 61, the electric power-assisted unit 62, the control unit 63, the power supply 64 and the signal receiver 65 of this pedelec will be further described as below with reference to Figs. 1-4.

Step 1: Disassembling the central shaft 41, the pedal chain wheel 42, the pedal device 43 and other existing parts on the central shaft of the existing bicycle.

Step 2: Installing the torque sensing unit 61, assembling the torque sensing unit 61 and the inner driving gear 46 with the central shaft 41, then insert it into the bottom bracket 11, and locking both ends in the axial direction by the left screw cap 111 and the right screw cap 112. The left screw cap 111 is provided with a notch (cable lead hole) used for leading out of the signal cable 636 on the signal receiver 65, with the signal cable 636 connecting with the torque sensing unit 61 and fixed it at the outside of the bottom bracket body 110.

Step 3: locking the pedal chain wheel 42 with central shaft 41 and freewheel 44 at the same side, then mounted the pedal chain wheel 42 appropriately to the slots on the inner driving gear 46 and locked with a nut, and then mounting the pedal devices 43, thus completing the installation of the torque sensing unit 61.

Step 4: Installation of the electric power-assisted unit 62, use the locking bolt nut 6241 to fix the first positioning block 6231 in the first lock-hole 6203 on the mounting face 6201 of the case 620, and then use locking bolt nut 6141 to fix the second positioning block 6235 in the third lock-hole 6205 on the mounting face 6201 of the case 620; the first groove 6232 and the second groove 6236 are fitted with the positioning raise-deck 6202, ensuring that the position is adjustable along the positioning raised-deck 6202; after assembly, the shape of the first positioning block 6231 and the second positioning block 6235 is match with the inside shape of the chainstay 12, and the driving chain wheel 622 of the motor 621 is at the same side with the pedal chain wheel 42 and the freewheel 44.

Step 5: putting the case 620 which already complete the first positioning block 6231 and the second positioning block 6235 in Step 3 to the bottom of the chainstay 12, the mounting interface 6201 jointing with the bottom of the chainstay 12, the external trapezoidal shape of the first positioning block 6231 and the second positioning block 6235 is matched with the internal trapezoidal shape of the chainstay 12.

Step 6: mounting the pressing plate 6238 on the top of the chainstay 12, and use the locking bolt nut 6242 to fix the case 620 through the second lock-hole 6204, and hear the case 620 is suspended on the bottom of the chainstay 12 by the pressing plate 6238.

Step 7: pushing the pressing plate 6238 backward along the surface of the chainstay 12, and adjusting the position of the case 620; when there is a close fitting between the concave structure of the pressing plate 6238 and the chainstay 12, and such that they cannot move, lock up the locking bolt nut 6242 of the second lock-hole 6204 tightly, and securing the position of the pressing plate 6238 and the case 620.

Step 8: pushing tightly the first positioning block 6231 and the second positioning block 6235 forward along the positioning raised-deck 6202 respectively; and adjusting the position of the first positioning block 6231 and the second positioning block 6235, so as to ensure that the trapezoidal side is jointed with the side of the chainstay 12 completely and locked tightly to the case 620; and then locking tightly the first positioning block 6231 and the second positioning block 6235 respectively. Since the distance between the mid line of the positioning raised-deck 6202 to the driving chain wheel 622 is equal to the distance between the mid line of bottom bracket 11 to mid line of the plane of the pedal chain wheel 42, after the positioning mechanism 623 and the case 620 completely fixed, then the driving chain wheel 622 on the drive shaft of the motor reducer 621, the pedal chain wheel 42 and the freewheel 44 will be on the same horizon.

Step 9: assembling the chain 45, enveloping and engaging the pedal chain wheel 42, the drive chain wheel 622 and the freewheel 44 with the chain 45, thus forming a closed drive chain system, allowing both the pedal chain wheel 42 and the drive chain wheel 622 to output a driving force to the freewheel 44.

Step 10: assembling the power switch 631, the control panel 632, the speed regulator 633, the controller 638 and the power supply 64 of the control unit 63; the power supply 64 and the power switch 631 installed on the rear luggage rack 17 or the inclined beam 13; for the sake of operation and observation, the control panel 632 and the speed regulator 633 are normally mounted on the handlebar 51, and the controller 638 fixedly mounted on the side wall 6208 of the case by a screw.

Step 11: connecting a signal cable 636, a data cable 637 and a power cable 635 among the torque sensing unit 61, the electric power-assisted unit 62, the control unit 63, the power supply 64 and the signal receiver 65, with the power cable 635 winding the frame 10 to get fixed; adjusting the debugging of the pedelec, and making the appropriate adjustment.

Thus assembly of the torque sensing unit 61, the electric power-assist unit 62, the control unit 63, the power supply 64, and the signal receiver 65 of the pedelec are completed.

As described above, the motor reducer 621 of the pedelec is completely fixed below the first beam 121 and the second beam 122, with the positioning mechanism 623 limiting the fixed position; the driving chain wheel 622 connected with the motor reducer 621 is also always kept in a same horizon with the position of the pedal chain wheel 42, and thus achieving a good positioning effect, ensuring the stability of power output of the motor reducer 621. When maintenance or disassembly or assembly is needed, the pedelec can effectively avoid difficulties of alignment of disassembly and assembly.

Meanwhile, the final users can convert the existing bicycle by themselves, without any modification on the frame of the existing bicycle; by substituting the electric power-assisted device 60 of the present utility model according to the above steps, a regular bicycle can then be convert into a pedelec through a simple and fast process, meeting the needs of final users by DIY converting a bicycle.

When the pedelec is in operation, the cyclist pedals the pedal devices 43 of the pedelec to generate a torque on the central shaft 41; then the torque sensing unit 61 after getting the pedal torque signal and data through the signal receiver 65, and transfers them to the controller 638 at the same time. Controller 638 will analysis the torque data and calculates the output power for the motor reducer 621, i.e. controls the motor reducer by a gentle increment; the output power of the motor reducer 621 is transferred to the chain 45 via the driving chain wheel 622, thus driving the pedelec to go forward. If the power is to be cut off, just stop pedaling, the torque sensing unit 61 cannot receive the torque signal of the central shaft 41, and the signal receiver 65 has no data, either, with the controller 638 controlling the motor reducer 621 to stop operation in this case.

## Claims

1. A method of converting a bicycle into pedelec, wherein, it comprises the following steps:
(A) a bicycle is provided, comprising a bicycle frame (10), a rear wheel (30) and a driving unit (40), wherein, the bicycle frame (10) includes a bottom bracket (11) and a chainstay (12) connected, the rear wheel (30) being rotatably mounted on the chainstay (12) via a rear shaft (31); a driving unit (40) includes a central shaft (41), a pedal chain wheel (42), two pedal devices (43), a freewheel (44) and a chain (45); the central shaft (41) is rotatably mounted in the bottom bracket (11), and the pedal chain wheel (42) is mounted on the central shaft (41), with the two pedal devices (43) mounted at both ends of the central shaft (41) respectively; the freewheel (44) is rotatably mounted on the rear shaft (31) and cooperates with the rear wheel (30), so as to drive the rear wheel (30) to rotate; the chain (45) is connected with the pedal chain wheel (42) and the freewheel (44), so as to transmit the driving force of the pedal chain wheel (42) to the freewheel (44);
(B) an electric power-assisted device (60) is provided, which includes a torque sensing unit (61), an electric power-assisted unit (62) and a control unit (63);
(C) the torque sensing unit (61) is installed inside the bottom bracket (11) and cooperates with the central shaft (41), so as to sense the torque generated on the central shaft (41) by the pedal devices (43);
(D) the control unit (63) is electrically connected with the torque sensing unit (61), according to the torque signal generated by the torque sensing unit (61), the control unit (63) will transmit the control signal to electric power-assist unit (62);
(E) the electric power-assisted unit (62) is mounted on the rear chainstay (12) and cooperates with the chain (45) according to the size of control signal, the electric power-assisted unit (62) will indicate the corresponding driving force to the chain (45);
the electric power-assisted unit (62) includes a motor reducer (621), a driving chain wheel (622) and a positioning mechanism (623); the drive chain wheel (622) is mounted on the output shaft of the motor reducer (621), and cooperates with the driving chain wheel (622); the motor reducer (621) is mounted on the chain stay (12) by the positioning mechanism (623);
wherein, the chainstay (12) includes a first beam (121) and a second beam (122) that are mounted at their ends on the bottom bracket (11), where a wedge-shaped mounting area is formed near the bottom bracket (11), the narrow side of the mounting area is closed to the bottom bracket (11); the motor reducer(621) is mounted on the rear chainstay (12) by the positioning mechanism (623);
wherein, the positioning mechanism (623) includes a pressing plate (6238) and a first locking bolt nut (6242), the pressing plate (6238) and the motor reducer (621) being arranged above and below the mounting area respectively; and the pressing plate (6238) is detachably connected with the motor reducer (621) via the first locking bolt nut (6242);
**characterised in that** the pressing plate (6238) has a concave structure (6239) on its bottom for embedment suiting the mounting area, so as to prevent the pressing plate (623 8) from shifting from narrow to wider side;
wherein, the positioning mechanism (623) includes at least one piece positioning block (6230) and at least one piece second locking bolt nut (6241); with which the positioning block (6230) is fixed by the at least one piece second locking bolt nut (6241) between the pressing plate (6238) and the motor reducer (621), then between the first beam (121) and the second beam (122), tightly close the inside of the first beam (121) and the second beam (122) through positioning block (6230), so as to prevent the pressing plate (6238) and the motor reducer (621) from shifting from wider side to narrow side;
wherein, at least one piece positioning block (6230) is fixed on the motor reducer (621) by the second locking bolt nut (6241), the mentioned positioning block (6230) is having a waisted-shape hole that allow the second locking bolt nut (6241) go through, so as to make the position of the positioning block (6230) and the motor reducer (621) adjustable;
wherein, at least one piece positioning block (6230) with a chute at the bottom, the top of the motor reducer (621) formed a positioning raised-deck (6202)to suit the chute; wherein, the distance between the mid line of the positioning raised-deck (6202) to the driving chain wheel (622) is equal to the distance between the mid line of the bottom bracket (11) to mid line of the plane of pedal chain wheel (42).

2. The method of converting a bicycle according to claim 1, wherein, he bottom bracket (11) includes a cylindrical bottom bracket body (110), a left screw cap (111) and a right screw cap (112) mounted at both ends; the sides of the mentioned cylindrical bottom bracket body (110) connected with the chainstay (12); Step (C) and also Step (K): put the torque sensing unit (61) on the central shaft, then put the central shaft (41) into bottom bracket body (110), and rotatably mounted the left screw cap (111) and the right screw cap (112).

3. The method of converting a bicycle according to claim 2, wherein, Step (C) and also Step (L): mounted the inner driving gear (46) on the central shaft (41), then mounted the pedal chain wheel (42) appropriately to the slots on the inner driving gear (46).

## Patentansprüche

1. Verfahren zum Umwandeln eines Fahrrads in ein Pedelec, wobei es die folgenden Schritte umfasst:
(A) ein Fahrrad wird vorgesehen, umfassend einen Fahrradrahmen (10), ein Hinterrad (30) und eine Antriebseinheit (40), wobei der Fahrradrahmen (10) verbunden einen Tretlager (11) und eine Kettenstrebe (12) aufweist, wobei das Hinterrad (30) drehbar an der Kettenstrebe (12) über eine hintere Welle (31) angebracht ist; Antriebseinheit (40) eine zentrale Welle (41), ein Pedalkettenrad (42), zwei Pedalvorrichtungen (43), einen Freilauf (44) und eine Kette (45) enthält; die zentrale Welle (41) drehbar in dem Tretlager (11) montiert ist, und die Pedalkettenrad (42) auf der zentralen Welle (41) montiert ist, wobei die beiden Pedalvorrichtungen (43) jeweils an beiden Enden der zentralen Welle (41) montiert sind; der Freilauf (44) drehbar an der hinteren Welle (31) montiert ist und mit dem Hinterrad (30) kooperiert, um das Hinterrad (30) zum Drehen anzutreiben; die Kette (45) mit dem Pedalkettenrad (42) und dem Freilauf (44) verbunden ist, um die Antriebskraft des Pedalkettenrads (42) auf den Freilauf (44) zu übertragen;
(B) eine elektrische Hilfskraftvorrichtung (60) wird vorgesehen, die eine Drehmomenterfassungseinheit (61), eine elektrische Hilfskrafteinheit (62) und eine Steuereinheit (63) enthält;
(C) die Drehmomenterfassungseinheit (61) wird innerhalb des Tretlagers (11) installiert und kooperiert mit der zentralen Welle (41), um den durch Pedalvorrichtungen (43) auf der zentralen Welle (41) erzeugten Drehmoment abzufühlen;
(D) die Steuereinheit (63) wird elektrisch mit der Drehmomenterfassungseinheit (61) verbunden, wobei die Steuereinheit (63) gemäß dem von der Drehmomenterfassungseinheit (61) erzeugten Drehmomentsignal das Steuersignal auf die elektrische Hilfskrafteinheit (62) überträgt;
(E) die elektrische Hilfskrafteinheit (62) wird an der hinteren Kettenstrebe (12) angebracht und kooperiert mit der Kette (45) entsprechend der Größe des Steuersignals, wobei die elektrische Hilfskrafteinheit (62) die entsprechende Antriebskraft auf die Kette (45) ausgibt;
die elektrische Hilfskrafteinheit (62) ein Motoruntersetzungsgetriebe (621), ein Antriebskettenrad (622) und einen Positionierungsmechanismus (623) enthält; das Antriebskettenrad (622) auf der Abtriebswelle des Motoruntersetzungsgetriebe (621) montiert ist, und mit dem Antriebskettenrad (622) kooperiert; das Motoruntersetzungsgetriebe (621) an der Kettenstrebe (12) durch den Positionierungsmechanismus (623) montiert ist;
wobei die Kettenstrebe (12) einen ersten Träger (121) und einen zweiten Träger (122) enthält, die an ihren Enden an dem Tretlager (11) montiert sind, wobei ein keilförmiges Befestigungsbereich nahe dem Tretlager (11) gebildet ist, wobei die Schmalseite der Befestigungsbereichs zum Tretlager (11) geschlossen ist; das Motoruntersetzungsgetriebe (621) auf der hinteren Kettenstrebe (12) durch den Positionierungsmechanismus (623) montiert ist;
wobei der Positionierungsmechanismus (623) eine Druckplatte (6238) und eine erste Verriegelungsbolzenmutter (6242) umfasst, die Druckplatte (6238) und der Motoruntersetzungsgetriebe (621) jeweils oberhalb und unterhalb der Montagefläche angeordnet sind; und die Druckplatte (6238) lösbar mit dem Motoruntersetzungsgetriebe (621) durch die erste Verriegelungsbolzenmutter (6242) verbunden ist;
**dadurch gekennzeichnet, dass** die Druckplatte (6238) zur Einschliessung des Montagebereichs eine konkave Struktur (6239) an seiner Unterseite hat, um die Druckplatte (6238) im Montagebereich vom Verschieben von dem schmalen Ende zu dem breiteren Ende zu verhindern;
wobei der Positionierungsmechanismus (623) mindestens einen Positionierungsblock (6230) und mindestens ein zweites Stück Verriegelungsschraubenmutter (6241) enthält; mit dem der Positionierungsblock (6230) lösbar über mindestens das zweite Stück Verriegelungsbolzenmutter (6241) zwischen der Druckplatte (6238) und dem Motoruntersetzungsgetriebe (621), dann zwischen dem ersten Träger (121) und dem zweiten Träger (122), dicht gegen Innenseite des ersten Trägers (121) und des zweiten Trägers (122) durch Positionierungsblock (6230) fixiert wird, um die Druckplatte (6238) und das Motoruntersetzungsgetriebe (621) im Montagebereich vom Verschieben von dem breiteren Ende zu dem schmalen Ende zu verhindern;
wobei das mindestens ein Stück Positionierungsblock (6230) auf dem Motoruntersetzungsgetriebe (621) durch die zweite Verriegelungsbolzenmutter (6241) befestigt wird, der genannte Positionierungsblock (6230) ein tailliert geformtes Loch hat, das die zweite Verriegelungsbolzenmutter (6241) durchlaufen lässt, um so die Position des Positionierungsblocks (6230) und des Motoruntersetzungsgetriebe (621) einstellbar zu machen;
wobei der zumindest ein Positionierungsblock (6230) mit einer Rinne an der Unterseite, der Oberseite des Motoruntersetzungsgetriebe (621) ein positionierendes angehobenes Deck (6202) bilden, um mit der Rinne zu kooperieren; wobei der Abstand zwischen der Mittellinie des positionierenden angehobenen Deck (6202) zum Antriebskettenrad (622) gleich dem Abstand zwischen der Mittellinie des Tretlagers (11) zur Mittellinie der Ebene des Pedalkettenrades (42) ist.

2. Das Verfahren zum Umwandeln eines Fahrrads nach Anspruch 1, wobei der Tretlager (11) einen zylindrischen Trettlagerkörper (110), eine linke Schraubkappe (111) und eine rechte Schraubkappe (112) enthält, die an beiden Enden angebracht sind; die Seiten des erwähnten zylindrischen Tretlagerkörpers (110) mit der Kettenstrebe (12) verbunden sind; Schritt (C) und auch Schritt (K): die Drehmomentsensoreinheit (61) auf die zentrale Welle setzen, dann die zentrale Welle (41) in den Tretlagerkörper (110) setzen und die linke Schraubkappe (111) und die rechte Schraubkappe (112) drehbar gelagert werden.

3. Verfahren zum Umwandeln eines Fahrrads nach Anspruch 2, wobei Schritt (C) und auch Schritt (L): das innere Antriebszahnrad (46) auf der zentralen Welle (41) montiert wird, dann das Pedalkettenrad (42) entsprechend den Schlitzen auf der inneren Antriebszahnrad (46) montiert wird.

## Revendications

1. Procédé de conversion d'une bicyclette en vélo électrique, **caractérisé en ce qu'**il comprend les étapes suivantes:
(A) une bicyclette est prévue, comprenant un cadre de bicyclette (10), une roue arrière (30) et une unité d'entraînement (40), dans lequel, le cadre de bicyclette (10) comprend un boîtier de pédalier (11) et une fourche arrière (12) connecté, la roue arrière (30) étant monté de manière rotative sur la fourche arrière (12) par l'intermédiaire d'un arbre arrière (31); une unité d'entraînement (40) comprend un arbre central (41), une roue à chaîne de pédale (42), deux dispositifs de pédale (43), une roue libre (44) et une chaîne (45); l'arbre central (41) est monté de manière rotative dans le boîtier de pédalier (11) et la roue à chaîne de pédale (42) est monté sur l'arbre central (41), les deux dispositifs de pédale (43) montés aux deux extrémités de la partie centrale arbre (41), respectivement; la roue libre (44) est monté de manière rotative sur l'arbre arrière (31) et coopère avec la roue arrière (30), de manière à entraîner la roue arrière (30) en rotation; la chaîne (45) est relié à la roue dentée de pédale (42) et la roue libre (44), de manière à transmettre la force motrice de la roue à chaîne de pédale (42) à la roue libre (44);
(B) un dispositif d'assistée électrique (60) est prévu, qui comprend une unité de détection de couple (61), une unité d'assistée électrique (62) et une unité de commande (63);
(C) l'unité de détection de couple (61) est installé à l'intérieur du boîtier de pédalier (11) et coopère avec l'arbre central (41), de manière à détecter le couple généré sur l'arbre central (41) par les dispositifs de pédale (43);
(D) l'unité de commande (63) est connectée électriquement à l'unité de détection de couple (61), en fonction du signal de couple généré par l'unité de détection de couple (61), l'unité de commande (63) transmet le signal de commande d'assistée électrique (62);
(E) l'unité d'assistée électrique (62) est monté sur la fourche arrière (12) et coopère avec la chaîne (45) en fonction de la taille du signal de commande, l'unité d'assistée électrique (62) indique le correspondant force motrice à la chaîne (45).
l'unité d'assistée électrique (62) comprend un réducteur de moteur (621), une roue dentée d'entraînement (622) et un mécanisme de positionnement (623); la roue dentée d'entraînement (622) est monté sur l'arbre de sortie du réducteur de moteur (621) et coopère avec la roue dentée d'entraînement (622); le réducteur de moteur (621) est monté sur la fourche arrière (12) par le mécanisme de positionnement (623);
dans lequel la fourche arrière (12) comprend un premier support (121) et un second support (122) qui sont montés à leurs extrémités sur le boîtier de pédalier (11), où un la zone de montage cunéiforme est formé près du boîtier de pédalier (11), le côté étroit de la zone de montage est fermé au boîtier de pédalier (11); le réducteur de moteur (621) est monté sur la fourche arrière (12) arrière par le mécanisme de positionnement (623);
dans lequel le mécanisme de positionnement (623) comprend une plaque de pression (6238) et un premier écrou de boulon de verrouillage (6242), la plaque de pression (6238) et le réducteur de moteur (621) étant disposé au-dessus et au-dessous de la zone de montage, respectivement; et la plaque de pression (6238) est relié de manière amovible avec le réducteur de moteur (621) par l'intermédiaire du premier écrou de boulon de verrouillage (6242);
**caractérisé en ce que** dans lequel la plaque de pression (6238) présente une structure concave (6239) sur son fond pour l'encastrement convenant à la zone de montage, de manière à empêcher la plaque de pressage (623 8) de se déplacer à partir de étroite à côté le plus large;
dans lequel le mécanisme de positionnement (623) comprend au moins un bloc pièce de positionnement (6230) et au moins une seconde pièce contre-écrou de boulon (6241); avec lequel le bloc de positionnement (6230) est fixé par au moins une deuxième contre-écrou de boulon (6241) entre la plaque de pression (6238) et le réducteur de moteur (621), puis entre le premier faisceau (121) et le second faisceau (122), fermer hermétiquement l'intérieur du premier faisceau (121) et le second faisceau (122) à travers le bloc de positionnement (6230), de manière à empêcher la plaque de pression (6238) et le réducteur de moteur (621) de se déplacer de plus larges côté pour affiner côté;
dans lequel au moins un bloc pièce de positionnement (6230) est fixé sur le moto-réducteur (621) par le second écrou de boulon de verrouillage (6241), le bloc de positionnement susmentionné (6230) est d'avoir un trou en forme cintrée qui permettent le second écrou de boulon de verrouillage (6241) passer, de manière à rendre la position du bloc de positionnement (6230) et le réducteur de moteur (621) réglable;
dans lequel au moins un bloc pièce de positionnement (6230) avec une goulotte vers le bas, la partie supérieure du réducteur de moteur (621) formée d'une position surélevée pont (6202) en fonction de la chute; dans lequel la distance entre la ligne médiane du relevé pont de positionnement (6202) à la roue dentée d'entraînement (622) est égale à la distance entre la ligne médiane du boîtier de pédalier (11) à ligne médiane du plan de la chaîne de pédale roue (42).

2. Le procédé de conversion d'une bicyclette selon la revendication 1, dans lequel le boîtier de pédalier (11) comprend un corps du boîtier de pédalier cylindrique (110), un bouchon fileté à gauche (111) et un bouchon fileté à droite (112) monté à les deux extrémités; les côtés du corps de du boîtier de pédalier cylindrique mentionné (110) relié à la fourche arrière (12); L'étape (C), ainsi que l'étape (K): mettre le dispositif de détection de couple (61) sur l'arbre central, puis mettre l'arbre central (41) dans le corps de pédalier (110), et monté de façon à pouvoir tourner le bouchon fileté à gauche (111) et le bouchon à vis droit (112).

3. Le procédé de conversion d'une bicyclette selon la revendication 2, dans lequel l'étape (C), et aussi l'étape (L): monté l'engrenage d'entraînement intérieur (46) sur l'arbre central (41), puis monté la roue de la chaîne de la pédale (42) de manière appropriée aux fentes sur le pignon d'entraînement intérieur (46).
